# EUROPÄISCHE PATENTSCHRIFT

(11) **EP 1 769 176 B1**
(45) Veröffentlichungstag und Bekanntmachung des Hinweises auf die Patenterteilung: **19.12.2007**
(21) Anmeldenummer: 05770231.8
(22) Anmeldetag: 13.07.2005
(51) Int. Cl.: F16J 15/18, F16F 9/36

(54) **DICHTUNGSANORDNUNG**
SEAL ARRANGEMENT
ENSEMBLE D'ETANCHEITE

(30) Priorität: 13.07.2004 DE 102004033851
(43) Veröffentlichungstag der Anmeldung: 04.04.2007
(73) Patentinhaber: Trelleborg Sealing Solutions Germany GmbH, 70565 Stuttgart (DE)
(72) Erfinder: JORDAN, Holger, 73765 Neuhausen a.d.F. (DE)
(74) Vertreter: Holzmüller, Reinhold
(86) Internationale Anmeldenummer: PCT/DE2005/001233
(87) Internationale Veröffentlichungsnummer: WO 2006/005330

(56) Entgegenhaltungen:
- EP-A- 0 363 676
- WO-A-03/021128
- DE-A1- 2 155 273
- DE-A1- 3 202 705
- DE-A1- 3 702 581
- DE-A1- 3 724 370
- DE-A1- 4 032 921
- DE-A1- 19 649 114
- DE-B- 1 113 147
- DE-B- 1 144 544
- DE-B- 1 275 367
- DE-U- 7 422 901
- DE-U1- 7 903 640
- US-A- 3 856 287

## Beschreibung

Die Erfindung betrifft eine Dichtungsanordnung zum Abdichten eines Arbeitsraumes, der von einem konzentrisch gegen ein äußeres Maschinenteil beweglichen inneren Maschinenteil und dem äußeren Maschinenteil gebildet wird. Derartige Dichtungsanordnungen werden zwischen dem äußeren und dem inneren Maschinenteil angeordnet. Das äußere Maschinenteil kann z.B. durch einen Zylinder eines Gasdruckzylinders gebildet werden und das innere Maschinenteil kann von einer Kolbenanordnung des Gasdruckzylinders gebildet werden. Eine derartige Vorrichtung kann der DE-A-1 113 147 entnommen werden.

Derartige Dichtungsanordnungen werden zum Abdichten von Gasdruckzylindern eingesetzt. Ein Beispiel einer gattungsgemäßen Dichtungsanordnung ist aus der DE 196 49 114 A1 bekannt. Da sich das Medium Gas im Gasdruckzylinder nicht für eine Schmierfilmbildung im Bereich der Dichtungsanordnung eignet wird entweder Fett im Bereich des Dichtringes der Dichtungsanordnung als Schmiermittel eingesetzt oder es wird als Schmiermittel Öl im Arbeitsraum des Gasdruckzylinders bevorratet. Das Öl wird dann beim Betätigen des Gasdruckzylinders in den Bereich des Dichtringes eingefördert.

Nachteilig bei bekannten Dichtungsanordnungen ist es, dass das Schmiermedium nur einmalig dosiert werden kann und bei Volumenverlust zu Mangelschmierung führt. Bei Volumenerhöhung des Schmiermediums kommt es zu Druckschwankungen im Bereich des Dichtrings. Dies führt zu unterschiedlich starker Reibung des Dichtringes gegen die Kolbenstange und damit zu einem erhöhten Verschleiß.

Der Erfindung liegt die Aufgabe zugrunde, eine Dichtungsanordnung bereitzustellen, mittels derer die Nachteile des Standes der Technik vermieden werden und mit der insbesondere ein Zirkulieren des Schmiermittels unter Vermeidung von Schmiermittelverlusten ermöglicht wird.

Diese Aufgabe wird durch die Dichtungsanordnung des unabhängigen Anspruches gelöst. Die abhängigen Ansprüche stellen bevorzugte Ausführungsformen der Erfindung dar.

Bei der erfindungsgemäßen Dichtungsanordnung zum Abdichten eines Arbeitsraumes, der von einem konzentrisch gegen ein äußeres Maschinenteil beweglichen inneren Maschinenteil und dem äußeren Maschinenteil gebildet wird, ist eine Hülse vorgesehen, in der ein Schmiermittelraum ausgebildet ist, wobei der Schmiermittelraum durch einen arbeitsraumseitigen Dichtring und einen arbeitsraumabgewandten Dichtring abgetrennt ist. Das Volumen des Schmiermittelraums ist also nach zwei Seiten abgedichtet. Mindestens einer der Dichtringe, bevorzugt der arbeitsraumseitige, ist als asymmetrischer Dichtring ausgebildet. Die Dichtringe sind derart angeordnet, dass beim Betrieb der Maschinenteile mit der, zwischen dem äußeren und dem inneren Maschinenteil angeordneten, Dichtungsanordnung ein Schmiermittel vom Arbeitsraum in den Schmiermittelraum eingefördert wird. Der Arbeitsraum selbst beinhaltet also im Falle eines Gasdruckzylinders, in dem die erfindungsgemäße Dichtungsanordnung eingesetzt ist, ein Gas/Schmiermittelgemisch. Die Hülse weist eine Ventilvorrichtung zur Überdruckentlastung des Schmiermittelraums auf.

Mittels der erfindungsgemäßen Dichtungsanordnung ist ein kontinuierliches Befüllen, bzw. Wiederbefüllen, des Schmiermittelraumes durch die asymmetrischen Dichtringe, insbesondere den arbeitsraumseitigen Dichtring, durch die dynamische Pumpwirkung bei einer Axialbewegung des inneren Maschinenteils relativ zum äußeren Maschinenteil möglich. Die erfindungsgemäße Dichtungsanordnung ermöglicht ein definiertes Zirkulieren eines Schmiermediums durch hydrodynamisches Einfördern aus dem Arbeitsraum in den Schmiermittelraum. Um einen Druckanstieg durch eingefördertes Volumen, also Gas oder Schmiermittel aus dem Arbeitsraum, zu verhindern ist die Ventilvorrichtung als Druckentlastung vorgesehen, die bei ansteigendem Druck bevorzugt in den Arbeitsraum ventiliert. Im Zusammenspiel der asymmetrischen Dichtung und der Überdruckentlastung wird eine Dichtungsanordnung mit einem zirkulierten Schmiermittelraum zur Verfügung gestellt. Wenn beide Dichtringe als asymmetrische Dichtringe ausgebildet sind hat die Dichtungsreibung des arbeitsraumseitigen Dichtringes einen nur geringen Einfluss auf die das Befüllen des Schmiermittelraumes aufgrund des Füllgleichgewichts von beiden Seiten des Schmiermittelraumes. Es findet kein unerwünscht hoher Druckaufbau im Schmiermittelraum statt, aufgrund der Druckentlastungsventilvorrichtung, die z.B. durch eine elastische Membran oder durch bewegliche Trennkolben realisiert sein kann. Dadurch werden Volumenänderungen im Schmiermittelraum kompensiert. Da der Druck im Schmiermittelraum im Wesentlichen dem Druck im Arbeitsraum entspricht, ist lediglich der arbeitsraumabgewandte Dichtring druckbeaufschlagt, d.h. dort liegt eine Druckdifferenz vor. Dies führt aufgrund der Geometrie und des verwendeten Verbunds zu einer geringen Reibung zwischen der Dichtungsanordnung und dem inneren Maschinenteil. Der arbeitsraumabgewandte Dichtring dichtet also den Arbeitsraumdruck gegen den Außenraum, also meist die Atmosphäre, ab. Diesem Dichtring wird Schmiermittel aus dem Schmiermittelraum unter gleich bleibenden Schmiermitteldruckbedingungen angeboten. Das von der erfindungsgemäßen Dichtungsanordnung gebildete System führt sehr robust zu konstantem Druck und konstanten Volumenverhältnissen im Schmiermittelraum, was für die Reibungsverhältnisse und das Verschleißverhalten entscheidend ist.

Bevorzugt ist der arbeitsraumseitige Dichtring in einer arbeitsraumseitigen umlaufenden Nut angeordnet und/oder der arbeitsraumabgewandte Dichtring in einer arbeitsraumabgewandten umlaufenden Nut angeordnet, bevorzugt wobei die Nuten in der inneren Umfangsfläche der Hülse angeordnet sind. Dies ermöglicht eine einfache Montage der erfindungsgemäßen Dichtungsanordnung. Die gesamte Dichtungsanordnung kann als ein Teil ausgeführt werden.

Die Ventilvorrichtung kann vorteilhaft als ein radial verlaufender Durchbruch, bevorzugt eine Bohrung, in der Hülse mit einem, in einer radial in der äußeren Umfangsfläche der Hülse verlaufenden Nut angeordneten, O-Ring ausgebildet sein. Dadurch wird ein zuverlässiges und einfach aufgebautes Ventil realisiert.

Wenn die Ventilvorrichtung eingerichtet ist, die Überdruckentlastung in Richtung des Arbeitsraums zu ermöglichen, wird aus dem Schmiermittelraum zur Überdruckentlastung abgeführtes Schmiermittel wieder zum Einfördern aus dem Arbeitsraum zur Verfügung gestellt.

Das Abführen des zur Überdruckentlastung abgeführten Schmiermittels in den Arbeitsraum kann einfach dadurch erreicht werden, dass der Außenradius, d.h. der Außendurchmesser, der Hülse zwischen dem arbeitsraumseitigen Ende der Hülse und dem O-Ring der Ventilvorrichtung kleiner ist als zwischen dem O-Ring der Ventilvorrichtung und dem arbeitsraumabgewandten Ende der Hülse. Das Schmiermittel wird dabei zwischen der äußeren Umfangsfläche der Hülse und einer Innenoberfläche des äußeren Maschinenteils geführt.

In einer bevorzugten Ausführungsform der erfindungsgemäßen Dichtungsanordnung weist die Hülse zusätzlich eine Druckbeaufschlagungsventilvorrichtung zur Druckbeaufschlagung des Schmiermittelraums auf. Volumenänderungen durch Leckmengen im Schmiermittelraum sind dadurch besser und durch die Auslegung der Druckbeaufschlagungsventilvorrichtung definiert kompensierbar. Insbesondere kann ein zweiseitiger Druckausgleich des Schmiermittelraums erfolgen.

Die Druckbeaufschlagungsventilvorrichtung ist in einfacher und kostengünstiger Weise als ein radial verlaufender Durchbruch, bevorzugt eine Bohrung, in der Hülse mit einem, in einer radial in der inneren Umfangsfläche der Hülse verlaufenden Nut angeordneten, O-Ring ausgebildet.

Der arbeitsraumseitige Dichtring weist vorteilhaft einen L-förmigen axialen Querschnitt auf, wobei die waagerechte Basis des L den Außenumfang des Dichtringes ausbildet und der senkrechte Steg des L an dessen oberen Ende eine Dichtkante aufweist. Diese Dichtungsringform führt zu einer optimalen Befüllung des Schmiermittelraums.

Der arbeitsraumabgewandte Dichtring weist vorteilhaft einen U-förmigen axialen Querschnitt auf, wobei die beiden senkrechten Schenkel des U an deren oberen Enden jeweils eine Dichtkante ausbilden (Twinseal) und wobei zwischen dem arbeitsraumabgewandten Dichtring und dem Nutgrund der arbeitsraumabgewandten Nut ein Vorspannring zum Anpressen des Dichtringes an das innere Maschinenteil vorgesehen ist. Diese Dichtungsform entspricht z.B. der Hochdruckdichtung der DE 196 49 114 A1. Ein derartiger Dichtring eignet sich besonders gut zur Abdichtung eines Gasdruckzylinders.

Beide Dichtelemente haben stets einen asymmetrischen Pressungsverlauf im Bereich der dynamischen Dichtkanten, der ein Einfördern von Schmiermittel in den Schmiermittelraum ermöglicht.

Bevorzugt ist im Bereich des arbeitsraumabgewandten Endes der Hülse ein Abstreifring, bevorzugt ein Einzellippenabstreifer, angeordnet. Ein Abstreifring verhindert das Eindringen von Verschmutzungen in die Dichtungsanordnung. Ein Einzellippenabstreifer hat eine Doppelwirkung, er weist eine geringe Reibung auf und bewirkt eine Schmiermittelölfilmdichtung, wobei kein eingeschlossener Druckaufbau zwischen Dichtung und Abstreifer entsteht.

Um die Dichtungsanordnung druckdicht zwischen äußerem- und inneren Maschinenteil einsetzen zu können ist vorteilhaft in der äußeren Umfangsfläche der Hülse eine radial verlaufende Nut, zur Aufnahme eines der dichtenden Einpassung der Dichtungsanordnung in das äußere Maschinenteil dienenden äußeren Dichtringes, angeordnet.

Weitere Einzelheiten und Ausgestaltungen der Erfindung ergeben sich aus der nachfolgenden Beschreibung von Ausführungsbeispielen unter Bezugnahme auf die Zeichnungen im Zusammenhang mit den Ansprüchen. Es zeigen, unter Weglassung für das Verständnis der Erfindung nicht erforderlicher Einzelheiten:
Figur 1 zeigt eine erfindungsgemäße Dichtungsanordnung in einem Gasdruckzylinder.
Figur 2 zeigt die den Schmiermittelraum einer erfindungsgemäßen Dichtungsanordnung bildende Hülse mit einer Druckbeaufschlagungsventilvorrichtung.

Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

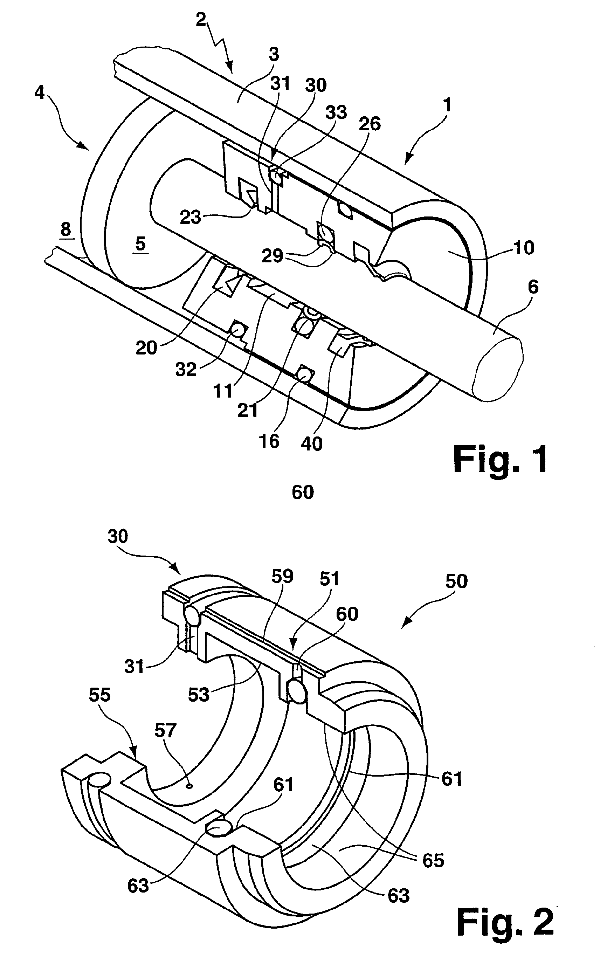

In Figur 1 ist eine erfindungsgemäße Dichtungsanordnung 1 in einem Gasdruckzylinder 2 in einer perspektivischen aufgeschnittenen Darstellung gezeigt. Der Gasdruckzylinder 2 weist einen äußeren Zylinder 3 auf, in dem eine Kolbenanordnung 4 konzentrisch gegen den Zylinder 3 beweglich angeordnet ist. Die Kolbenanordnung 4 wird aus einem Kolben 5 und einer Kolbenstange 6, die aus dem Zylinder 3 herausragt, gebildet. Der Kolben 5 und der Zylinder 3 bilden einen üblicherweise geschlossenen Arbeitsraum 8, der an die erfindungsgemäße Dichtungsanordnung 1 angrenzt. In der Figur ist der Zylinder 3 offen dargestellt. Der Abschluss des Arbeitsraums 8 am dichtungsanordnungsabgewandten Ende des Zylinders 3 ist nicht dargestellt. Der Arbeitsraum 8 ist mit einem Öl-Gasgemisch befüllt, das zum Beispiel unter einem Druck von vier Megapascal steht. Arbeitsraumseitig handelt es sich daher bei üblichen Gasdruckzylindern um die Hochdruckseite der Dichtungsanordnung 1. Die erfindungsgemäße Dichtungsanordnung 1 ist zwischen dem Zylinder 3 und der Kolbenstange 6 als Abdichtung des Arbeitsraumes 8 angeordnet. Dabei umschließt die Dichtungsanordnung 1 die Kolbenstange 6 konzentrisch. Die Dichtungsanordnung 1 weist eine Hülse 10 auf, in der ein Schmiermittelraum 11, z.B. zum Bevorraten von Öl, ausgebildet ist. Die Hülse 10 ist aus einem relativ zu dem Material der Dichtringe, also gummielastischen Werkstoffen, starren Material gefertigt. Z.B. kann die Hülse 10 aus einem Kunststoff oder einem Metall oder auch einer Keramik hergestellt sein. In die äußere Umfangsfläche der Hülse ist eine Nut mit einem O-Ring 16 zur passgenauen und dichtenden Einpassung der Hülse 10 in den Zylinder 3 eingearbeitet. Zur Vergrößerung des Schmiermittelraums 11 ist dieser als eine umlaufende Nut in der inneren Umfangsfläche der Hülse 10 ausgebildet. Die Wandungen des Schmiermittelraums 11 werden also von den Wandungen dieser Nut und der Oberfläche der Kolbenstange 6 gebildet. Das gesamte Volumen des Schmiermittelraums 11 reicht bis zu zwei asymmetrischen Dichtringen 20,21, durch die dieser abgetrennt ist. Einer der Dichtringe 20 ist zur Abtrennung vom Arbeitsraum 8 in einer arbeitsraumseitigen umlaufenden Nut in der inneren Umfangsfläche der Hülse 10 angeordnet. Der weitere Dichtring 21 ist zur Abtrennung und Abdichtung gegen ein Außenvolumen, also üblicherweise die Niederdruckseite, in einer arbeitsraumabgewandten umlaufenden Nut in der inneren Umfangsfläche der Hülse 10 angeordnet. Die Dichtringe 20,21 sind derart angeordnet, dass beim Betrieb des Gasdruckzylinders 2, also bei einer axialen Bewegung des Kolbens 5 gegen den Zylinder 3, ein Schmiermittel, z.B. Öl, vom Arbeitsraum 8 in den Schmiermittelraum 11 eingefördert wird. Dies wird durch die Asymmetrie der Dichtringe 20,21 erreicht. Der arbeitsraumseitige Dichtring 20 weist dazu einen L-förmigen axialen Querschnitt auf, wobei die waagerechte Basis des L den Außenumfang des Dichtringes 20 ausbildet und der senkrechte Steg des L an dessen oberen Ende eine Dichtkante 23 aufweist. Ein Beispiel für einen derartigen Dichtring mit L-förmigem axialem Querschnitt ist der L-Cup® der Anmelderin. In der dargestellten Orientierung des Dichtringes 20, bei der der Steg des L an der arbeitsraumseitigen Flanke der arbeitsraumseitigen Nut anliegt, erfolgt ein derartiges Einfördern von z.B. Öl in den Schmiermittelraum 11. Gleichzeitig kann durch den arbeitsraumseitigen Dichtring 20 eine Entlüftung des Schmiermittelraumes 11 erfolgen. Der arbeitsraumabgewandte Dichtring 21 weist einen U-förmigen axialen Querschnitt auf, wobei die beiden senkrechten Schenkel des U an deren oberen Enden jeweils eine Dichtkante 24 ausbilden und wobei zwischen dem arbeitsraumabgewandten Dichtring 21 und dem Nutgrund der arbeitsraumabgewandten Nut ein Vorspannring 26 zum Anpressen des Dichtringes 21 an das innere Maschinenteil, also die Kolbenstange 6, vorgesehen ist. Ein derartiger Dichtring 21 mit einem U-förmigen axialen Querschnitt eignet sich besonders gut für eine druckdichte Abdichtung. Ein Beispiel für einen derartigen Dichtring mit U-förmigem axialem Querschnitt ist in der DE 196 49 114 A1 beschrieben.

In der Hülse 10 ist eine Ventilvorrichtung 30 zur Überdruckentlastung des Schmiermittelraums 11 ausgebildet. Diese Ventilvorrichtung 30 weist eine Bohrung 31 auf, die radial von der äußeren Umfangsfläche der Hülse 10 nach innen bis in den Schmiermittelraum 11 verläuft. Weiter weist die Hülse 10, als Teil der Ventilvorrichtung 30, eine radial in der äußeren Umfangsfläche der Hülse 10 verlaufende Nut 32 über dem äußeren Ende der Bohrung 31 auf. In dieser Nut 32 ist ein O-Ring 33 eingelegt. Damit eine Überdruckentlastung in Richtung des Arbeitsraumes 8 möglich ist, ist der Außenradius der Hülse zwischen dem arbeitsraumseitigen Ende der Hülse und dem O-Ring 33 der Ventilvorrichtung 30 kleiner als zwischen dem O-Ring 33 der Ventilvorrichtung 30 und dem arbeitsraumabgewandten Ende der Hülse 10. Ein im Schmiermittelraum 11 unter Überdruck stehendes Medium kann also über die Bohrung 31 den O-Ring 33 radial vom Nutgrund der Nut 32, in die er eingelegt ist, abheben und dann zwischen der äußeren Umfangsfläche der Hülse 10 und der Innenwand des Zylinders 3 in den Arbeitsraum 8 abfließen.

Im Bereich des arbeitsraumabgewandten Endes der Hülse 10 ist als ein Abstreifring 40 ein Einzellippenabstreifer angeordnet, der ebenfalls in einer Nut in der inneren Umfangsfläche der Hülse 10 eingelegt ist. Dieser Abstreifring 40 wirkt in doppelter Weise. Der Abstreifring 40 verhindert das Eindringen von Schmutz in die Dichtungsanordnung 1 und gleichzeitig das Verschmutzen der Kolbenstange 6 durch ausgetretenes Schmiermittel.

In Figur 2 ist die den Schmiermittelraum einer erfindungsgemäßen Dichtungsanordnung bildende Hülse 50 mit einer Druckbeaufschlagungsventilvorrichtung 51 in einer perspektivischen aufgeschnittenen Darstellung gezeigt. Der Schmiermittelraum wird von einer breiten umlaufenden Nut 53 in der inneren Umfangsfläche der Hülse 50 ausgebildet. Im Unterschied zu der erfindungsgemäßen Dichtungsanordnung der Figur 1 ist die Bohrung 31 der Ventilvorrichtung zur Überdruckentlastung nicht direkt in den Schmiermittelraum geführt, sondern endet in einem Bereich 55 zwischen dem Schmiermittelraum und einem der den Schmiermittelraum abtrennenden Dichtringe. Da dieser Bereich 55 nicht durch eine Dichtung vom Schmiermittelraum abgetrennt ist, ergibt sich eine unmittelbare Verbindung zum Schmiermittelraum. In der Darstellung umfasst die Ventilvorrichtung 30 zwei derartige Bohrungen 31, 57. Die Dichtringe können bei einer Ausführung der Hülse 50 entsprechend Figur 2 z.B. in Nuten, die direkt in einer inneren Umfangsfläche des äußeren Maschinenteils eingearbeitet sind, eingelegt sein. Die Dichtringe sind in der Figur 2 nicht gezeigt. Auch die Hülse 50 in dieser Darstellung wird zwischen einem äußeren Maschinenteil, z.B. einem Zylinder, und einem inneren Maschinenteil, z.B. einer Kolbenstange, angeordnet. Ein weiterer Unterschied besteht darin, dass ein aus dem Schmiermittelraum abzuleitendes Medium nicht mittels unterschiedlicher Radien der äußeren Umfangsfläche der Hülse 50 weiter geführt wird, sondern über einen als axial verlaufende Einkerbung in dieser Oberfläche ausgebildeten Kanal 59.

Die dargestellte Hülse 50 weist eine Druckbeaufschlagungsventilvorrichtung 51 zur Druckbeaufschlagung des Schmiermittelraums auf. Die Druckbeaufschlagungsventilvorrichtung 51 ist als eine radial verlaufende Bohrung 60 in der Hülse 50 mit einem, in einer radial in der inneren Umfangsfläche der Hülse 50 verlaufenden Nut 61 angeordneten, O-Ring 63 ausgebildet. Die Bohrung 60 verbindet den Kanal 59 mit dem Nutgrund dieser Nut 61. Die Nut 61 selbst ist in einem Bereich 65 der inneren Umfangsfläche der Hülse 50 angeordnet, der zwischen dem Schmiermittelraum und einem der Dichtringe, die diesen abtrennen, liegt. Auch hier ergibt sich eine unmittelbare Verbindung zum Schmiermittelraum, da zwischen dieser Nut 61 und dem Schmiermittelraum keine Dichtung angeordnet ist.

Vorgeschlagen wird eine Dichtungsanordnung 1 zum Abdichten eines Arbeitsraumes 8, der von einem konzentrisch gegen ein äußeres Maschinenteil 3 beweglichen inneren Maschinenteil 4 und dem äußeren Maschinenteil 3 gebildet wird, mit einer Hülse 10, in der ein Schmiermittelraum 11 ausgebildet ist, wobei der Schmiermittelraum 11 durch einen arbeitsraumseitigen asymmetrischen Dichtring 20 und einen arbeitsraumabgewandten asymmetrischen Dichtring 21 abgetrennt ist, wobei die Dichtringe 20,21 derart angeordnet sind, dass beim Betrieb der Maschinenteile 3,4 mit der, zwischen dem äußeren und dem inneren Maschinenteil 3,4 angeordneten, Dichtungsanordnung 1 ein Schmiermittel vom Arbeitsraum 8 in den Schmiermittelraum 11 eingefördert wird und wobei die Hülse 10 eine Ventilvorrichtung 30 zur Überdruckentlastung des Schmiermittelraums 11 aufweist.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Dichtungsanordnung (1) zum Abdichten eines Arbeitsraumes (8), der von einem konzentrisch gegen ein äußeres Maschinenteil (3) beweglichen inneren Maschinenteil (4) und dem äußeren Maschinenteil (3) gebildet wird,
mit einer Hülse (10,50) in der ein Schmiermittelraum (11) ausgebildet ist, wobei der Schmiermittelraum (11) durch einen arbeitsraumseitigen Dichtring (20) und einen arbeitsraumabgewandten Dichtring (21) abgetrennt ist und mindestens einer der Dichtringe als asymmetrischer Dichtring ausgebildet ist,
wobei
die Dichtringe (20,21) derart angeordnet sind, dass beim Betrieb der Maschinenteile (3,4) mit der, zwischen dem äußeren und dem inneren Maschinenteil (3,4) angeordneten, Dichtungsanordnung (1) ein Schmiermittel vom Arbeitsraum (8) in den Schmiermittelraum (11) eingefördert wird und wobei
die Hülse (10,50) eine Ventilvorrichtung (30) zur Überdruckentlastung des Schmiermittelraums (11) aufweist, derart, dass ein Zirkulieren des Schmiermittels unter Vermeidung von Schmiermittelverlusten ermöglicht wird.

2. Dichtungsanordnung nach Anspruch 1,
**dadurch gekennzeichnet, dass** der arbeitsraumseitige Dichtring (20) in einer arbeitsraumseitigen umlaufenden Nut angeordnet ist und dass der arbeitsraumabgewandte Dichtring (21) in einer arbeitsraumabgewandten umlaufenden Nut angeordnet ist, bevorzugt wobei die Nuten in der inneren Umfangsfläche der Hülse (10) angeordnet sind.

3. Dichtungsanordnung nach mindestens einem der Ansprüche 1 bis 2,
**dadurch gekennzeichnet, dass** die Ventilvorrichtung (30) als ein radial verlaufender Durchbruch, bevorzugt eine Bohrung (31,57), in der Hülse (10,50) mit einem, in einer radial in der äußeren Umfangsfläche der Hülse (10,50) verlaufenden Nut angeordneten, O-Ring (33) ausgebildet ist.

4. Dichtungsanordnung nach mindestens einem der Ansprüche 1 bis 3,
**dadurch gekennzeichnet, dass** die Ventilvorrichtung (30) eingerichtet ist, die Überdruckentlastung in Richtung des Arbeitsraums (8) zu ermöglichen.

5. Dichtungsanordnung nach Anspruch 3 und 4,
**dadurch gekennzeichnet, dass** der Außendurchmesser der Hülse (10) zwischen dem arbeitsraumseitigen Ende der Hülse (10) und dem O-Ring (33) der Ventilvorrichtung (30) kleiner ist als zwischen dem O-Ring (33) der Ventilvorrichtung (30) und dem arbeitsraumabgewandten Ende der Hülse (10).

6. Dichtungsanordnung nach mindestens einem der Ansprüche 1 bis 5,
**dadurch gekennzeichnet, dass** die Hülse (50) eine Druckbeaufschlagungsventilvorrichtung (51) zur Druckbeaufschlagung des Schmiermittelraums aufweist.

7. Dichtungsanordnung nach Anspruch 6,
**dadurch gekennzeichnet, dass** die Druckbeaufschlagungsventilvorrichtung (51) als ein radial verlaufender Durchbruch, bevorzugt eine Bohrung (60), in der Hülse (50) mit einem, in einer radial in der inneren Umfangsfläche der Hülse (50) verlaufenden Nut (61) angeordneten, O-Ring (63) ausgebildet ist.

8. Dichtungsanordnung nach mindestens einem der vorhergehenden Ansprüche,
**dadurch gekennzeichnet, dass** der arbeitsraumseitige Dichtring (20) einen L-förmigen axialen Querschnitt aufweist, wobei die waagerechte Basis des L den Außenumfang des Dichtringes (20) ausbildet und der senkrechte Steg des L an dessen oberen Ende eine Dichtkante (23) aufweist.

9. Dichtungsanordnung nach mindestens Anspruch 2,
**dadurch gekennzeichnet, dass** der arbeitsraumabgewandte Dichtring (21) einen U-förmigen axialen Querschnitt aufweist, wobei die beiden senkrechten Schenkel des U an deren oberen Enden jeweils eine Dichtkante (24) ausbilden und wobei zwischen dem arbeitsraumabgewandten Dichtring (21) und dem Nutgrund der arbeitsraumabgewandten Nut ein Vorspannring (26) zum Anpressen des Dichtringes (21) an das innere Maschinenteil (4) vorgesehen ist.

10. Dichtungsanordnung nach mindestens einem der vorhergehenden Ansprüche,
**dadurch gekennzeichnet, dass** im Bereich des arbeitsraumabgewandten Endes der Hülse (10) ein Abstreifring (40), bevorzugt ein Einzellippenabstreifer, angeordnet ist.

11. Dichtungsanordnung nach mindestens einem der vorhergehenden Ansprüche,
**dadurch gekennzeichnet, dass** in der äußeren Umfangsfläche der Hülse (10) eine radial verlaufende Nut zur Aufnahme eines einer dichtenden Einpassung der Dichtungsanordnung (1) in das äußere Maschinenteil (3) dienenden äußeren Dichtringes (16), angeordnet ist.

12. Gasdruckzylinder (2) mit einer Dichtungsanordnung (1) nach mindestens einem der vorhergehenden Ansprüche,
wobei das äußere Maschinenteil (3) durch einen Zylinder des Gasdruckzylinders (2) gebildet wird und das innere Maschinenteil (4) von einer Kolbenanordnung des Gasdruckzylinders (2) gebildet wird.

## Claims

1. Sealing arrangement (1) for sealing a working chamber (8) being formed by an inner machine part (4) which is concentrically movable against an outer machine part (3) and the outer machine part (3),
having a sleeve (10, 50) with a lubricating chamber (11) formed therein, the lubricating chamber (11) being separated by a sealing ring (20) facing the working chamber and a sealing ring (21) facing away from the working chamber and at least one of the sealing rings being formed as an asymmetrical sealing ring,
in which the sealing rings (20, 21) are arranged such that, upon operating the machine parts (3, 4) together with the sealing arrangement (1) which is arranged between the outer and the inner machine part (3, 4), a lubricant is fed from the working chamber (8) into the lubricating chamber (11) and in which
the sleeve (10, 50) comprises a valve assembly (30) to relieve the lubricating chamber (11) from overpressure such that circulation of the lubricant without any lubricant being lost is enabled.

2. Sealing arrangement according to claim 1,
**characterized in that** the sealing ring (20) facing the working chamber is arranged in a circumferential groove facing the working chamber and that the sealing ring (21) facing away from the working chamber is arranged in a circumferential groove facing away from the working chamber, the grooves preferably being arranged in the inner circumferential face of the sleeve (10).

3. Sealing arrangement according to at least one of the claims 1 to 2, **characterized in that** the valve assembly (30) is formed as a radially extending through hole, preferably a bore (31, 57), in the sleeve (10, 50) having an O-ring (33) extending radially in a groove in the outer circumferential face of the sleeve (10, 50).

4. Sealing arrangement according to at least one the claims 1 to 3, **characterized in that** the valve assembly (30) is adapted to enable the overpressure to be relieved towards the working chamber (8).

5. Sealing arrangement according to claim 3 and 4, **characterized in that** the outer diameter of sleeve (10) is smaller between the end of the sleeve (10) facing the working chamber and the O-ring (33) of the valve assembly (30) than between the O-ring (33) of the valve assembly (30) and the end of sleeve (10) facing away from the working chamber.

6. Sealing arrangement according to at least one the claims 1 to 5, **characterized in that** the sleeve (50) comprises a pressurizing valve assembly (51) to pressurize the lubricating chamber.

7. Sealing arrangement according to claim 6, **characterized in that** the pressurizing valve assembly (51) is formed as a radially extending through hole, preferably a bore (60), in the sleeve (50) having an O-ring (63) extending radially in a groove (61) in the inner circumferential face of the sleeve (10, 50).

8. Sealing arrangement according to at least one of the preceding claims, **characterized in that** the sealing ring (20) facing the working chamber has an L-shaped axial cross-section with the horizontal base of the L forming the outer circumference of the sealing ring (20) and the vertical web of the L having a sealing edge (23) at the top end thereof.

9. Sealing arrangement according to at least claim 5, **characterized in that** the sealing ring (21) facing away from the working chamber has a U-shaped axial cross-section wherein both vertical legs of the U form a sealing edge (24) each at the top ends thereof and wherein between the sealing ring (21) and the base of the groove of the groove facing away from the working chamber a stressing ring (26) is provided for urging the sealing ring (21) towards the inner machine part (4).

10. Sealing arrangement according to at least one of the preceding claims, **characterized in that** a stripping ring (40), preferable a single-lip stripper, is arranged in the area contiguous to the end of the sleeve (10) facing away from the working chamber.

11. Sealing arrangement according to at least one of the preceding claims, **characterized in that** a radially extending groove is arranged in the outer circumferential face of the sleeve (10) to receive an outer sealing ring (16) serving the purpose of urging the sealing arrangement (1) into sealing fitting into the outer machine part (3).

12. Gas pressure cylinder (2) having a sealing arrangement (1) according to at least one of the preceding claims, the outer machine part (3) being formed by a cylinder of the gas pressure cylinder (2) and the inner machine part (4) being formed by the piston arrangement of the gas pressure cylinder (2).

## Revendications

1. Agencement d'étanchéité (1) pour étancher une chambre de travail (8) qui est formée par une partie de machine extérieure (3) et par une partie de machine intérieure (4) mobile concentriquement par rapport à la partie de machine extérieure (3),
comprenant une douille (10, 50) dans laquelle est formé un compartiment à lubrifiant (11), ledit compartiment à lubrifiant (11) étant séparé par une bague d'étanchéité (20) côté chambre de travail et par une bague étanchéité (21) côté opposé à la chambre de travail, et l'une au moins des bagues d'étanchéité est réalisée sous forme de bague d'étanchéité asymétrique,
dans lequel
les bagues d'étanchéité (20, 21) sont agencées de telle façon que lors du fonctionnement des parties de machines (3, 4) un lubrifiant est convoyé depuis la chambre de travail (8) jusque dans le compartiment à lubrifiant (11) au moyen de l'agencement d'étanchéité (1) agencé entre la partie de machine extérieure (3) et la partie de machine intérieure (4), et dans lequel
la douille (10, 50) comprend un dispositif à soupapes (30) pour décharger le compartiment à lubrifiant (11) vis-à-vis des surpressions, de telle façon qu'une circulation du lubrifiant est rendue possible en évitant des pertes de lubrifiant.

2. Agencement d'étanchéité selon la revendication 1,
**caractérisé en ce que** la bague d'étanchéité (20) côté chambre de travail est agencée dans une gorge périphérique du côté de la chambre de travail, et **en ce que** la bague d'étanchéité (21) côté opposé à la chambre de travail est agencée dans une gorge périphérique du côté opposé à la chambre de travail, et dans lequel les gorges sont de préférence agencées dans la surface périphérique intérieure de la douille (10).

3. Agencement d'étanchéité selon l'une au moins des revendications 1 à 2,
**caractérisé en ce que** le dispositif à soupapes (30) est réalisé sous forme de traversée radiale, de préférence d'un perçage (31, 57), dans la douille (10, 50) avec un joint torique (33) agencé dans une gorge radiale qui s'étend dans la surface périphérique extérieure de la douille (10, 50).

4. Agencement d'étanchéité selon l'une au moins des revendications 1 à 3,
**caractérisé en ce que** le dispositif à soupapes (30) est organisé pour permettre la décharge de surpressions en direction de la chambre de travail (8).

5. Agencement d'étanchéité selon la revendication 3 et 4,
**caractérisé en ce que** le diamètre extérieur de la douille (10) entre l'extrémité de la douille (10) côté chambre de travail et le joint torique (33) du dispositif à soupapes (30) est plus petit que celui entre le joint torique (33) du dispositif à soupapes (30) et l'extrémité de la douille (10) du côté opposé à la chambre de travail.

6. Agencement d'étanchéité selon l'une des revendications 1 à 5,
**caractérisé en ce que** la douille (50) comprend un dispositif à soupapes (51) de mise sous pression pour la misc sous pression du compartiment à lubrifiant.

7. Agencement d'étanchéité selon la revendication 6,
**caractérisé en ce que** le dispositif à soupapes (51) de mise sous pression est réalisée sous forme d'une traversée radiale, de préférence d'un perçage (60) dans la douille (50) avec un joint torique (63) agencé dans une gorge (61) qui s'étend radialement dans la surface périphérique intérieure de la douille (50).

8. Agencement d'étanchéité selon l'une au moins des revendications précédentes,
**caractérisé en ce que** la bague d'étanchéité (20) côté chambre de travail présente une section axiale en forme de L, la base horizontale du L formant la périphérie extérieure de la bague d'étanchéité (20) et le tronc vertical du L présentant une arête d'étanchéité (23) à son extrémité supérieure.

9. Agencement d'étanchéité selon au moins la revendication 2,
**caractérisé en ce que** la bague d'étanchéité (21) opposée à la chambre de travail présente une section axiale en forme de U, les deux branches verticales du U formant chacune à leur extrémité supérieure une arête d'étanchéité (24), et il est prévu une bague de précontrainte (26) entre la bague d'étanchéité (21) du côté opposé à la chambre de travail et le fond de la gorge opposée à la chambre de travail, destinée à presser la bague d'étanchéité (21) contre la partie de machine intérieure (4).

10. Agencement d'étanchéité selon l'une au moins des revendications précédentes,
**caractérisé en ce que**, dans la zone de l'extrémité de la douille (10) opposée à la chambre de travail, est agencée une bague de raclage (40), de préférence une bague de raclage à lèvre unique.

11. Agencement d'étanchéité selon l'une au moins des revendications précédentes,
**caractérisé en ce que**, dans la surface périphérique extérieure de la douille (10), est ménagée une gorge radiale pour recevoir une bague d'étanchéité extérieure (16) qui sert à une intégration étanche de l'agencement d'étanchéité (1) dans la partie de machine extérieure (3).

12. Cylindre à gaz sous pression (2) comprenant un agencement d'étanchéité (1) selon l'une au moins des revendications précédentes,
dans lequel la partie de machine extérieure (3) est formée par un cylindre du cylindre à gaz sous pression (2), et la partie de machine intérieure (4) est formée par un agencement de piston du cylindre à gaz sous pression (2).
